(19) Europäisches Patentamt / European Patent Office / Office européen des brevets

(11) **EP 4 113 822 A1**

(12) **DEMANDE DE BREVET EUROPEEN**

(43) Date de publication:
**04.01.2023 Bulletin 2023/01**

(21) Numéro de dépôt: **22182383.4**

(22) Date de dépôt: **30.06.2022**

(51) Classification Internationale des Brevets (IPC):
**H02P 8/12** *(2006.01)*    **H02P 8/20** *(2006.01)*
**H02P 8/34** *(2006.01)*    **H02P 11/00** *(2006.01)*
**H02P 21/22** *(2016.01)*    **H02P 25/026** *(2016.01)*
**H02P 27/06** *(2006.01)*

(52) Classification Coopérative des Brevets (CPC):
**H02P 8/12; H02P 8/20; H02P 8/34; H02P 11/00;
H02P 21/22; H02P 25/026; H02P 27/06**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **02.07.2021 FR 2107215**

(71) Demandeur: **VALEO EQUIPEMENTS
ELECTRIQUES MOTEUR
94046 Créteil Cedex (FR)**

(72) Inventeurs:
• **CHASSARD, Pierre
94046 CRETEIL CEDEX (FR)**
• **BERNARD, François Xavier
94046 CRETEIL CEDEX (FR)**

(74) Mandataire: **Valeo Powertrain Systems
Service Propriété Intellectuelle
Immeuble le Delta
14, avenue des Béguines
95892 Cergy Pontoise (FR)**

(54) **CONVERTISSEUR DE TENSION POUR UNE MACHINE ÉLECTRIQUE TOURNANTE**

(57) La présente invention propose un convertisseur de tension (1) comprenant un module de commande (2) adapté pour fournir un signal de contrôle (20) et un module de puissance (3) adapté pour recevoir le signal de contrôle (20) et piloter des phases d'un bobinage, le module de puissance (3) comprenant au moins un bras de commutation (30) par phase de bobinage, chaque bras de commutation (30) comprenant au moins un moyen (4) adapté pour déterminer un courant de phase dans ledit bras de commutation (IpU, IpV, IpW), le convertisseur de tension (1) comprenant également un module sommateur (5) adapté pour établir une estimation du courant d'alimentation du convertisseur de tension (Idc,estimé) en fonction desdits courants de phase détectés (IpU, IpV, IpW), le module de commande (2) comprenant un module de calcul (21) adapté pour établir une consigne de courant (Idc*) en fonction d'une consigne de couple (Torque*), le module de commande (2) comprenant également un module de régulation stator (22) adapté pour réguler le signal de contrôle (20) en fonction du courant d'alimentation estimé (Idc,estimé) et de la consigne de courant (Idc*).

[Fig. 2]

**Description**

L'invention concerne un convertisseur de tension et trouve une application particulièrement avantageuse dans le domaine des machines électriques tournantes telles que les alternateurs, les alterno-démarreurs ou encore les machines réversibles ou les moteurs électriques. On rappelle qu'une machine réversible est une machine électrique tournante apte à travailler de manière réversible, d'une part, comme générateur électrique en fonction alternateur et, d'autre part, comme moteur électrique par exemple pour démarrer le moteur thermique du véhicule tel qu'un véhicule automobile.

Une machine électrique tournante comprend un rotor mobile en rotation autour d'un axe et un stator fixe. En mode alternateur, lorsque le rotor est en rotation, il induit un champ magnétique au stator qui le transforme en courant électrique afin d'alimenter les consommateurs électriques du véhicule et de recharger la batterie. En mode moteur, le stator est alimenté électriquement et induit un champ magnétique entraînant le rotor en rotation par exemple pour démarrer le moteur thermique.

Classiquement, la machine comprend un module de commande permettant de générer des consignes de commande du rotor et du stator pour contrôler la puissance et/ou le couple fournis par la machine. La machine comprend également un module de puissance 3 adapté notamment pour fournir le signal électrique de puissance aux phases électrique du bobinage en fonction de la consigne de commande stator. Chacune de ces commandes est déterminée d'une part en fonction de paramètres de référence, notamment donnés par le calculateur global du véhicule indiquant le niveau de fonctionnement souhaité pour la machine, et d'autre part en fonction de paramètres instantanés de fonctionnement de la machine.

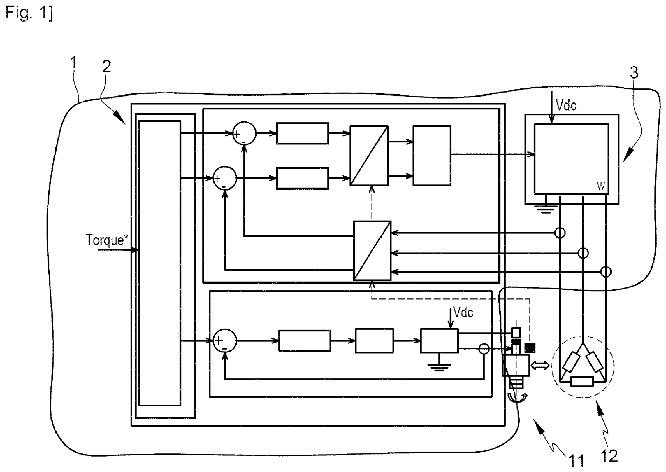

Les paramètres instantanés sont par exemple les courants de phase qui alimentent le stator, détectés par trois capteurs de courant positionnés respectivement sur chacune des trois phases en entrée du bobinage, comme dans l'art antérieur illustré à la [Fig. 1]. Cependant les trois capteurs doivent être positionnés en tenant compte des problèmes d'encombrement en entrée du bobinage.

Pour pallier à ce problème d'encombrement une solution est de déterminer les paramètres instantanés par des résistances positionnées dans le module de puissance, de sorte à déterminer le courant de chacune des phases. Cependant, cette solution pose un problème lors du fonctionnement en mode pleine onde de la machine. En effet les signaux détectés aux bornes des résistances ainsi positionnées ne permettent pas de déterminer les paramètres instantanés.

Il est donc nécessaire de proposer une solution non encombrante et peu cher, permettant d'effectuer la régulation de la machine, qui soit adaptée au mode pleine onde.

L'invention propose un convertisseur de tension comprenant : un module de commande adapté pour fournir un signal de contrôle et un module de puissance adapté pour recevoir le signal de contrôle et piloter des phases d'un bobinage, le module de puissance comprenant au moins un bras de commutation par phase de bobinage, chaque bras de commutation comprenant au moins un moyen adapté pour déterminer un courant de phase dans ledit bras de commutation, le convertisseur de tension comprenant également un module sommateur adapté pour établir une estimation du courant d'alimentation du convertisseur de tension en fonction desdits courants de phase détectés, le module de commande comprenant un module de calcul adapté pour établir une consigne de courant en fonction d'une consigne de couple, le module de commande comprenant également un module de régulation stator adapté pour réguler le signal de contrôle en fonction du courant d'alimentation estimé et de la consigne de courant.

L'invention propose donc de sommer les courants de phase en sortie du module de puissance, de sorte à estimer le courant d'alimentation du convertisseur de puissance. Le module de régulation stator régule la commande stator en fonction du courant d'alimentation estimé, par rapport à une consigne de courant issue d'un bilan de puissance de la machine. Une telle solution réduit l'encombrement et le coût du convertisseur de tension tout en étant adaptée au mode pleine onde.

Selon une réalisation, le moyen comprend une résistance ou un capteur à effet hall ou un capteur magnéto-résistif.

Selon une réalisation, le moyen est une résistance de l'ordre de 100 $\mu\Omega$ à 200 $\mu\Omega$.

Selon une réalisation, le bras de commutation comprend au moins un composant de puissance et une borne de masse, le moyen étant positionné entre le composant de puissance et la borne de masse.

Selon une réalisation, le module de calcul est adapté pour établir une consigne de courant en fonction d'un bilan de puissance entre une puissance électrique de référence donnée par la multiplication du courant de consigne par la tension d'alimentation mesurée aux bornes du terminal d'alimentation du convertisseur de tension, Pelec* = Vdc x Idc*, une puissance mécanique de référence donnée par la multiplication de la consigne de couple par la vitesse de rotation angulaire mécanique du rotor w, Pméca* = Torque* x w.

Selon une réalisation, le module de régulation stator comprend un filtre passe bas adapté pour filtrer le courant d'alimentation estimé.

Selon une réalisation, le module de régulation comprend un comparateur adapté pour fournir un signal d'erreur correspondant à la différence entre le courant d'alimentation estimé et la consigne de courant.

**EP 4 113 822 A1**

Selon une réalisation, le module de régulation stator comprend un module de transformation adapté pour fonctionner dans un mode pleine onde.

Selon une réalisation, le module sommateur comprend au moins un amplificateur opérationnel.

La présente invention a également pour objet une machine électrique tournante pour véhicule automobile comprenant un stator comprenant un bobinage formant au moins une phase et un convertisseur de tension.

La [Fig. 1] représente un schéma bloc d'une machine selon l'art antérieur.
La [Fig. 2] représente un schéma bloc d'une machine selon l'invention.
La [Fig. 3] détaille les composants des différents blocs du schéma de la machine selon l'invention.

Les éléments identiques, similaires ou analogues conservent les mêmes références d'une figure à l'autre. De plus, les exemples de réalisation qui sont décrits dans la suite ne sont nullement limitatifs. On pourra notamment imaginer des variantes de l'invention ne comprenant qu'une sélection de caractéristiques décrites par la suite isolées des autres caractéristiques décrites.

Une machine électrique tournante, notamment pour véhicule tel qu'un véhicule automobile ou un drone, transforme de l'énergie mécanique en énergie électrique, en mode alternateur, et peut fonctionner en mode moteur pour transformer de l'énergie électrique en énergie mécanique. Cette machine électrique tournante 10 est, par exemple, un alternateur, un alterno-démarreur, une machine réversible ou un moteur électrique. La machine électrique tournante comprend un rotor mobile en rotation autour d'un axe et un stator fixe.

Le stator 12 comporte un corps, par exemple formé d'un paquet de tôles doté d'encoches, et un bobinage électrique monté dans le corps. Le bobinage électrique est formé d'une ou plusieurs phases comportant au moins un conducteur électrique. Chaque phase comporte une extrémité formant une sortie de phase qui est connectée électriquement au module de puissance 3. Le module de puissance 3 permet de recevoir ou de fournir un signal électrique de puissance aux phases électrique du bobinage. Le module de puissance 3 forme un pont redresseur de tension pour transformer la tension alternative générée par les phases du stator 12 en une tension continue et/ou, à l'inverse, pour transformer une tension continue en une tension alternative pour alimenter les phases du stator. Le module de commande 2, à l'interface avec un calculateur externe de contrôle global du véhicule, fournit au module de puissance 3 un signal de contrôle 20 adapté pour réguler la tension du stator en fonction des besoins pour la machine.

Le rotor 11 est un rotor à griffe comportant, ici, deux roues polaires et une bobine enroulée autour d'un noyau des roues polaires. Par exemple, la machine comporte un collecteur monté sur le rotor et comporte des bagues collectrices reliées par des liaisons filaires à la bobine et un porte-balais disposé de façon à ce que des balais frottent sur les bagues collectrices pour alimenter électriquement la bobine du rotor. Les balais du porte-balais sont connectés électriquement au module de commande 2. Le module de commande 2 permet de commander également l'alimentation électrique du rotor en fonction des besoins pour la machine.

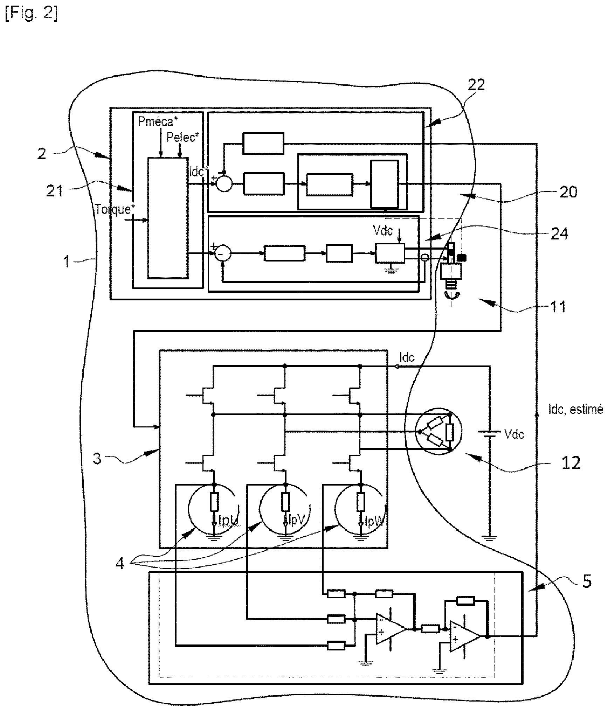

L'ensemble de l'étage de contrôle comprenant le module de commande 2, et de l'étage de puissance comprenant le module de puissance 3 forme le convertisseur de tension 1 schématisé à la [Fig. 2]. La machine peut comporter un boitier logeant le rotor 11 et le stator 12 et sur lequel peut être monté ce convertisseur de tension 1. Le convertisseur de tension comprend également un terminal d'alimentation connecté à la batterie du véhicule.

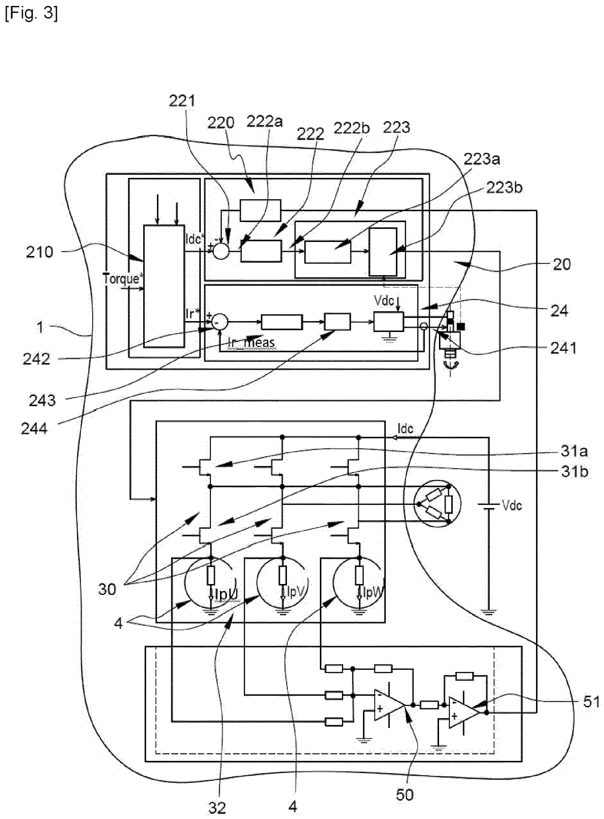

Comme détaillé à la [Fig. 3], le module de puissance 3 comprend au moins un bras de commutation 30 pour chaque phase de bobinage. Le convertisseur de tension 1 comprend donc typiquement trois bras de commutation 30 pour un système triphasé. Chaque bras de commutation 30 comprend une borne de masse 32 connectée électriquement à la borne de masse électrique GND du réseau électrique, une borne d'alimentation connectée électriquement à une borne positive B+ du réseau électrique, un premier et un deuxième composant de puissance 31a, 31b, une borne de phase agencée entre le premier composant de puissance 31a et le deuxième composant de puissance 31b et connectée électriquement à une phase électrique. Le premier composant de puissance 31a est agencé entre la borne d'alimentation et la borne de phase et le deuxième composant de puissance 31b est agencé entre la borne de masse et ladite borne de phase. Chaque composant de puissance fonctionne comme un interrupteur agencé pour commuter entre un état bloqué et un état passant. Dans l'état bloqué, l'interrupteur est ouvert et le courant électrique ne circule pas à travers le composant. Dans l'état passant, l'interrupteur est fermé et le courant électrique circule à travers le composant. Chaque composant de puissance 31a, 31b comprend une borne de commande connectée au module de contrôle du composant de puissance et permettant de piloter ledit composant entre l'état passant et l'état bloqué. Dans cet exemple, chaque composant de puissance 31a, 31b est un transistor, notamment du type MOSFET.

Chaque bras de commutation 30 du module de puissance comprend un moyen 4 pour déterminer le courant de phase IpU, IpV, IpW dans ce bras de commutation 30. Ce moyen est avantageusement une résistance.

Ce moyen 4 est avantageusement monté en pied de pont c'est-à-dire entre le composant de puissance 31b et la borne de masse 32. En variante le moyen est positionné entre les deux composants de puissance 31a, 31b du bras 30. Avec ce positionnement du moyen 4, il sera nécessaire de réaliser une mesure différentielle. En variante le bras de commutation comprend plusieurs moyens 4.

Le convertisseur de tension 1 comprend également un module sommateur 5. Le module sommateur reçoit en entrée les courants de phases déterminés par le moyen IpU, IpV, IpW et fournit une estimation du courant d'alimentation estimé Idc,estimé. Plus précisément, le module sommateur comprend un premier amplificateur opérationnel 50 adapté pour effectuer la somme des tensions aux bornes des résistances 4. Le deuxième amplificateur opérationnel 51 de mise à l'échelle du signal sommé est utilisé afin d'obtenir une corrélation entre la tension mesurée et le courant Idc, estimé, ajustable en utilisant le rapport de la résistance montée entre les bornes d'entrée et de sortie du deuxième amplificateur opérationnel et de la résistance montée entre la sortie du premier amplificateur et l'entrée du deuxième amplificateur.

Le module de commande 2 permettant de contrôler le module de puissance 3 comporte, comme illustré à la [Fig. 3], un module de régulation stator 22 ainsi qu'un module de calcul 21.

Le module de calcul 21 établit une consigne de courant Idc*, en fonction d'une consigne de référence du calculateur global du véhicule, telle que le couple Torque* souhaité pour la machine. La consigne de courant Idc* est envoyée au module de régulation 22.

Le module de régulation 22 reçoit également en entrée le courant estimé Idc,estimé détecté et génère le signal de contrôle 20 du module de puissance 3 en fonction des courants Idc* et Idc,estimé.

Plus précisément dans le module de régulation stator 22, la valeur du courant estimé Idc,estimé fournie au régulateur est éventuellement filtrée, par exemple moyennée, par un filtre passe bas 220, avant d'être comparée à la consigne de courant Idc* par un comparateur 221 du module de régulation 22. Le comparateur génère un signal d'erreur 222a correspondant à la différence entre le courant estimé Idc,estimé et la consigne de courant Idc*. Le signal d'erreur 222a est ensuite transformé en une tension d'erreur 222b par un correcteur 222 du module de régulation. La tension d'erreur 222b est ensuite envoyée à un module de transformation 223 du module de régulation. Le module de transformation 223 effectue une transformation de Park.

Le module de transformation 223 comprend un premier composant 223a capable de calculer un angle d'avance δ en fonction de la tension d'erreur 222b. Le module de transformation 223 comprend également un deuxième composant 223b utilisant également comme donnée d'entrée la position du rotor. Le deuxième composant 223b est capable de calculer les rapports cycliques des signaux à appliquer aux bornes des phases du stator 12, en fonction de la position du rotor et de l'angle d'avance δ. Le module de transformation 223 est adapté pour fonctionner dans un mode pleine onde.

Le module de transformation 223 délivre en sortie le signal de contrôle 20 pour chaque bras de commutation 30 du module de puissance 3, de rapport cyclique respectivement U, V, W. Le signal de contrôle 20 a par exemple la forme d'une tension créneau qui est appliquée au transistor 31a, 31b du bras de pont pour le commander et ainsi piloter la phase correspondante du bobinage.

Plus spécifiquement le module de calcul 21 du module de commande comprend un calculateur 210 adapté pour effectuer un bilan de puissance entre:

- la puissance mécanique de référence Pméca* correspondant à la consigne de couple Torque* qui est donnée par la multiplication de la consigne de couple Torque* par la vitesse de rotation angulaire mécanique du rotor w (en rad/s):

$$Pméca* = Torque* \times w$$

- la puissance électrique de référence Pelec* correspondant à la consigne de courant Idc* qui est donnée par la multiplication du courant de consigne Idc* par la tension d'alimentation Vdc mesurée aux bornes du terminal d'alimentation du convertisseur de tension (en Volts):

$$Pelec* = Idc* \times Vdc$$

- les pertes électriques qui sont :

  - les pertes joules au stator Pstator,
  - les pertes joules au rotor Protor,
  - les pertes joules au convertisseur Pconvertisseur,

- les pertes mécaniques de couple par frottements qui sont données par la multiplication du couple perdu par frottements Tperdu avec la vitesse de rotation angulaire mécanique du rotor w :

$$Pperdu = Tperdu \times w$$

Le bilan de puissance est donné par l'équation :

$$Pelec^* = Pm\acute{e}ca^* - Pperdu + Pstator + Pconvertisseur + Protor$$

$$Idc^* \times Vdc = (Torque^*-Tperdu) \times w + Pstator + Pconvertisseur + Protor$$

La boucle de position rotor utilisée par le second composant 223b fournit également la vitesse de rotation du rotor.

Le module de commande 2 comprend également un module de régulation rotor 24. Le module de régulation rotor 24 génère une consigne de commande de l'excitation rotor en fonction de la mesure du courant d'excitation rotor Ir_meas et du courant d'excitation de référence rotor Ir* souhaité pour la machine. Un capteur de courant 241 placé entre le module de régulation rotor et le rotor permet de détecter le courant d'excitation du rotor Ir_meas. Le courant d'excitation de référence Ir* est calculé par le module de calcul 21 pour un besoin en fonctionnement spécifique du véhicule. Le module de régulation rotor 24 comprend un comparateur 242 pour établir un signal d'erreur entre le courant consigne Ir* et le courant mesuré Ir, un correcteur 243 pour transformer le courant d'erreur en tension, et un modulateur 244. Une commande sous forme de tension est donc envoyée au rotor en sortie du module de régulation rotor 24 pour réguler le courant d'excitation du rotor.

La vitesse de rotation angulaire mécanique du rotor w est avantageusement supérieure à 4000RPM et notamment entre 4000RPM et 6000RPM, ce qui correspond à un passage en mode « pleine onde ». Le mode pleine onde permet d'appliquer la tension maximale sur le stator afin d'avoir la possibilité d'obtenir la puissance maximale de la machine. On note que la vitesse angulaire est en rad/s peut se convertir en rotation par minute, on parle alors de vitesse de rotation du rotor en N (en RPM); N = w*60/(2*pi).

En variante le moyen 4 est un autre type de capteur de courant 4 qu'une résistance. Le capteur est par exemple un capteur à effet hall associé avec un concentrateur magnétique. En variante le capteur de courant est de type résistance « shunt » associée avec un amplificateur différentiel de mesure de la tension shunt, représentative du courant mesuré. En variante le capteur de courant est un capteur de courant magnéto-résistif.

## Revendications

1. Convertisseur de tension (1) comprenant :

    - un module de commande (2) adapté pour fournir un signal de contrôle (20) et
    - un module de puissance (3) adapté pour recevoir le signal de contrôle (20) et piloter des phases d'un bobinage

        le module de puissance (3) comprenant au moins un bras de commutation (30) par phase de bobinage chaque bras de commutation (30) comprenant au moins un moyen (4) adapté pour déterminer un courant de phase dans ledit bras de commutation (IpU, IpV, IpW),
        le convertisseur de tension (1) comprenant également un module sommateur (5) adapté pour établir une estimation du courant d'alimentation du convertisseur de tension (Idc,estimé) en fonction desdits courants de phase détectés (IpU, IpV, IpW),
        le module de commande (2) comprenant un module de calcul (21) adapté pour établir une consigne de courant (Idc*) en fonction d'une consigne de couple (Torque*),
        le module de commande (2) comprenant également un module de régulation stator (22) adapté pour réguler le signal de contrôle (20) en fonction du courant d'alimentation estimé (Idc,estimé) et de la consigne de courant (Idc*).

2. Convertisseur de tension selon la revendication 1 dans lequel le moyen (4) comprend une résistance ou un capteur à effet hall ou un capteur magnéto-résistif.

3. Convertisseur de tension selon la revendication 2 dans lequel le moyen (4) est une résistance de l'ordre de 100 $\mu\Omega$ à 200 $\mu\Omega$.

4. Convertisseur de tension selon l'une des revendications 1 à 3 dans lequel le bras de commutation (30) comprend au moins un composant de puissance (31a, 31b) et une borne de masse (32), le moyen (4) étant positionné entre le composant de puissance (31a, 31b) et la borne de masse (32).

5. Convertisseur de tension selon l'une des revendications 1 à 4 dans lequel le module de calcul (21) est adapté pour établir une consigne de courant (Idc*) en fonction d'un bilan de puissance entre :

   - une puissance électrique de référence (Pelec*) donnée par la multiplication du courant de consigne (Idc*) par la tension d'alimentation (Vdc) mesurée aux bornes du terminal d'alimentation du convertisseur de tension:

$$Pelec^* = Vdc \times Idc^*,$$

   - une puissance mécanique de référence (Pméca*) donnée par la multiplication de la consigne de couple (Torque*) par la vitesse de rotation angulaire mécanique du rotor w:

$$Pméca^* = Torque^* \times w.$$

6. Convertisseur de tension selon l'une quelconque des revendications 1 à 5 dans lequel le module de régulation stator (22) comprend un filtre passe bas (220) adapté pour filtrer le courant d'alimentation estimé (Idc,estimé).

7. Convertisseur de tension selon l'une quelconque des revendications 1 à 6 dans lequel le module de régulation comprend un comparateur (221) adapté pour fournir un signal d'erreur (222a) correspondant à la différence entre le courant d'alimentation estimé (Idc,estimé) et la consigne de courant (Idc*).

8. Convertisseur de tension selon l'une quelconque des revendications 1 à 7 dans lequel le module de régulation stator (22) comprend un module de transformation (223) adapté pour fonctionner dans un mode pleine onde.

9. Convertisseur de tension selon l'une quelconque des revendications 1 à 8 dans lequel le module sommateur (5) comprend au moins un amplificateur opérationnel (50).

10. Machine électrique tournante pour véhicule automobile comprenant un stator (12) comprenant un bobinage formant au moins une phase et un convertisseur de tension (1) selon l'une des revendications 1 à 9.

Fig. 1]

[Fig. 2]

[Fig. 3]

Europäisches
Patentamt

European
Patent Office

Office européen
des brevets

# RAPPORT DE RECHERCHE EUROPEENNE

Numéro de la demande

EP 22 18 2383

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JP 2007 110814 A (NSK LTD) 26 avril 2007 (2007-04-26) | 1,2,4,6, 10 | INV. H02P8/12 |
| Y | * alinéa [0004] - alinéa [0011]; figures 11-14 * | 3,5,7-9 | H02P8/20 H02P8/34 H02P11/00 |
| Y | Vishay Dale .: "Power Metal Strip Shunt Resistor With Three Sense Pins, Very Low Value (50 [mu][Omega], 100 [mu][Omega], and 125 [mu][Omega])", , 9 mars 2021 (2021-03-09), pages 1-3, XP055895506, Extrait de l'Internet: URL:https://www.vishay.com/docs/30350/wsbs 8518-40.pdf [extrait le 2022-02-25] * le document en entier * | 3 | H02P21/22 H02P25/026 H02P27/06 |
| Y | FR 2 911 698 A1 (AIRBUS FRANCE SAS [FR]) 25 juillet 2008 (2008-07-25) * page 14, ligne 3 - ligne 13; figure 6 * | 5 | |
| Y | CN 102 255 529 A (UNIV HUNAN) 23 novembre 2011 (2011-11-23) * le document en entier * | 7-9 | **DOMAINES TECHNIQUES RECHERCHES (IPC)** H02P |
| A | JP 5 635032 B2 (HITACHI LTD) 3 décembre 2014 (2014-12-03) * alinéa [0016] * | 6 | |

Le présent rapport a été établi pour toutes les revendications

| Lieu de la recherche | Date d'achèvement de la recherche | Examinateur |
|---|---|---|
| Munich | 4 novembre 2022 | Roussel, Maxime |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

**EP 22 18 2383**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**04-11-2022**

| Document brevet cité au rapport de recherche | | Date de publication | Membre(s) de la famille de brevet(s) | | Date de publication |
|---|---|---|---|---|---|
| JP 2007110814 | A | 26-04-2007 | JP | 4742797 B2 | 10-08-2011 |
| | | | JP | 2007110814 A | 26-04-2007 |
| FR 2911698 | A1 | 25-07-2008 | FR | 2911698 A1 | 25-07-2008 |
| | | | US | 2009021196 A1 | 22-01-2009 |
| CN 102255529 | A | 23-11-2011 | AUCUN | | |
| JP 5635032 | B2 | 03-12-2014 | CN | 103368477 A | 23-10-2013 |
| | | | JP | 5635032 B2 | 03-12-2014 |
| | | | JP | 2013207973 A | 07-10-2013 |

EPO FORM P0460

Pour tout renseignement concernant cette annexe : voir Journal Officiel de l'Office européen des brevets, No.12/82